# EUROPEAN PATENT APPLICATION

(11) **EP 4 410 093 A1**
(43) Date of publication of application: **07.08.2024**
(21) Application number: 24154947.6
(22) Date of filing: 31.01.2024
(51) Int. Cl.: A01G 9/22

(54) **DEVICE AND METHOD FOR EXTENDING A SCREEN PROFILE IN A SCREEN ASSEMBLY**

(30) Priority: 01.02.2023 NL 2034066
(71) Applicant: Van Der Valk Systemen B.V., 2681 LP Monster (NL)
(72) Inventor: Prins, Vincent, Monster (NL)
(74) Representative: Nederlandsch Octrooibureau

(57) **Abstract**

A device for extending a screen profile in a screen assembly in a greenhouse or warehouse is provided. The device comprises a device channel with a device channel opening, and is configured to be arranged in the channel of a screen profile to extend a height of the screen profile. The device is configured to be inserted into the channel through the channel opening and comprises integrated locking features configured to lock the device inside the channel.

## Description

### Technical Field

The invention relates to a device and method for extending a screen profile in a screen assembly for a greenhouse or warehouse. Furthermore, the invention relates to a screen assembly including such a device, and a greenhouse or warehouse comprising such a device.

### Background Art

The application of screen assemblies in greenhouses or warehouses is generally known. Screen assemblies can fulfil various different functions, for example controlling the amount and incidence of light, prevent light emissions, or controlling the climate in the greenhouse by isolating the cultivation space against heat loss or the entry of heat. For these purposes, different types of screen assemblies are known that each comprise one or multiple screen cloths. The screen cloths may be brought from a folded condition, i.e., an open position, to an unfolded condition, i.e., a closed position, to optimally control the conditions in the greenhouse.

An example of a greenhouse comprising a screen assembly is disclosed in patent document NL1029362 C2. The screen assembly is attached to a plurality of lattice girders that span an opening between horizontal support beams in a support structure. The screen cloth is configured to unfold between the lattice girders. To that end, the screen cloth is connected to an elongate screen profile that extends perpendicular to the direction of folding and/or unfolding the screen cloth. A drive assembly is arranged below or above the screen profile to move the screen profile and thereby fold or unfold the screen cloth.

Typically, the drive assembly is directly connected to the screen profile. Disadvantageously, this limits the possibilities to flexibly arrange the screen cloth and the associated drive assembly at any desired level. For example, even if multiple screen cloths are provided above each other, it may be desirable to arrange all the drive assemblies at essentially the same level. Consequently, the distance between the respective screen cloths and drive assemblies would need to vary, which is not possible when the drive assembly is directly connected to the screen profile.

It would be advantageous to provide an improved screen assembly that provides more flexibility and/or addresses any of the disadvantages as explained above.

### Summary of Invention

Therefore, according to a first aspect of the invention, there is provided a device for extending a screen profile in a screen assembly. Such a screen profile comprises a channel with a channel opening. The device comprises a device channel with a device channel opening, wherein the device channel is spaced from the channel of the screen profile to extend a height of the screen profile. The device is configured to be inserted into the channel through the channel opening, the device comprising integrated locking features configured to lock the device inside the channel.

In this context, the "locking" of the device inside the channel should be interpreted as preventing that the device can accidentally disengage from the channel. The term "integrated locking features" refer to any type of locking features that can be integrally formed with the device including but not limited to a complementary pair of male and female connective features, pin-slot mechanisms, and features for engaging a snap-fit connection. Advantageously, no separate locking means such as screw, bolts, nails, or the like are required, and the device can quickly be fastened. Preferably no tools such as hammers, screwdrivers, etc. are required for fastening the device to the screen profile, preventing that the device is incorrectly fastened.

The device further comprises a device channel suitable for engaging further components of the screen assembly. This is beneficial since the device thereby effectively extends a height of the screen profile. Further components of the screen assembly may be connected to the device channel instead of to the channel of the screen profile. In particular, the drive assembly for driving the folding and/or unfolding of the screen cloth may be connected to the screen assembly at a position spaced from the screen profile instead of directly in the channel of the screen profile.

In an embodiment, the device is configured to extend the height of the screen profile with at least 3 cm, optionally at least 5 cm, or at least 10 cm. Typically the extension of the screen profile by a few centimeters already provides sufficient flexibility to arrange other components of the screen assembly on a desired level. It will be understood that it may depend on the screen assembly and the arrangement in a specific greenhouse or warehouse what extension is preferably obtained. The skilled person will understand how to adapt the device to obtain the desired extension height.

For example, in a specific application the device may be used to facilitate the arrangement of two independently controllable screen cloths that are arranged at a small distance from each other to form a cavity layer between the first and second screen cloth. The device according to the invention may be used to extend one of the screen profiles to enable the arrangement of the two individual drive assemblies that are required to drive the independent folding and unfolding of the screen cloths both on a single side of the cavity layer.

In an embodiment, the integrated locking features comprise one or more securing portions configured to be arranged entirely within the channel and dimensioned to prevent passage of the device back through the channel opening of the screen profile. Typically, the device is inserted into the channel following a certain path wherein a rotation or tilting of the device is required to insert the device into the channel. The securing portions prevent the disengagement of the device from the channel. In an embodiment, it may be possible to disengage the device by precisely reversing the steps required for fasten the device to the channel. Nevertheless, such a sequence of movements will typically not occur during use of the device and therefore there is no risk that the device is accidentally released.
Further advantageous to the securing portions being arranged entirely within the channel is that no parts or fasteners are extending from the channel or the device that could possibly damage a screen cloth.

In an embodiment, the one or more securing portions can be arranged in a contracted position for insertion into the channel and an expanded position for locking the device inside the channel. Typically, there may be two securing portions that may for example be pivotably connected to each other, or biased with respect to each other to facilitate switching between a contracted and expanded position.

In an embodiment, the integrated locking features are configured to block rotation of the device with respect to the channel around a longitudinal direction of the channel. Here the longitudinal direction of the channel is the direction wherein the channel extends and/or has a substantially constant cross section. Typically, the device will engage in the screen profile at a top end of the device, and be connected to the drive assembly at a lower end of the device. Hence the forces acting on the device are not aligned, resulting in a force couple. The securing portions in the channel or other integrated locking features are configured to block rotation of the device with respect to the channel.

Alternatively, or in addition to the securing portions, in an embodiment the device comprises a front element and a rear element. The integrated locking features comprise a pair of complementary male and female connective portions to lock the front element and rear element together. Advantageously, the front element and rear element are moveable with respect to one another during insertion into the channel. By fastening the elements to each other after insertion, disengagement may be prevented.

In an embodiment, the device comprises a front element and a rear element that are hingedly engaged to each other. In this context, the verb "to engage" should be interpreted broadly. A hinged engagement includes both a hinged connection, wherein the elements together form one integral device, as well as a separate front and rear element that comprise surfaces configured to engage with each other to form a hinge. Advantageously, the device can be inserted into and/or removed from the channel when a certain first angle between the front and rear element is arranged, whereas accidental disengagement of the channel may be prevented when a certain second angle between the front and rear element is arranged. It will be understood that typically the first angle and second angle are significantly different from each other. In an embodiment, the first and second angle differ at least 30 degrees, or at least 45 degrees.

In a further embodiment, the integrated locking features prevent a rotation of the front element with respect to the rear element. Advantageously, the device can be locked in a position wherein disengagement from the channel is prevented. In an embodiment, the front and rear element each comprise a body, wherein the bodies extend in parallel to each other when the device is locked in the channel of the screen profile.

In an embodiment, the front element further comprises part of a cylinder and the rear element comprises part of a hollow cylinder. An outer circumferential surface of the part of the cylinder of the front element is shaped complementary to an inner surface of the part of the hollow cylinder of the rear element, enabling the rear element to rotate with respect to the front element while the outer circumferential surface and inner surface remain engaged. It will be understood that the terms "front element" and "rear element" are merely introduced to distinguish the elements. Here the front element is typically arranged adjacent to a front side of the screen profile, and a rear element is arranged adjacent to a rear side of the screen profile. Alternatively, the front element may be the rear element and vice versa. Consequently, the outer cylindrical surface may also be provided on the rear element whereas the inner cylindrical surface may be provided on the front element.

In an embodiment, the device is integrally formed. Advantageously, the device consists of a single element. This has advantages for production, transportation, and installation. In an embodiment, the front and rear element are connected at the hinge. The hinged connection may for instance be provided by a living hinge to enable the production of the device by a single production process, preferably an extrusion process. Alternatively, the front element and rear element may be connected at a different position.

In a further embodiment, the front element and rear element are configured to be separated during the fastening of the device. Advantageously, the device may be produced as a single element. This may be advantageous for production, transportation, and installation.

In a further embodiment, the front element and rear element each comprise a channel forming portion configured to form the device channel after fastening the device to the screen profile. Alternatively, either the front element or the rear element comprises the device channel.

In a further embodiment, the integrated locking features are provided within the channel. Advantageously, when a further component or element of the screen assembly is arranged within the channel, this may prevent the accidental disengagement of the device.

In an embodiment, the device is configured to be moveable along the channel of the screen profile along a longitudinal direction of the channel. Advantageously, the installation is easier to perform since the device can first be engaged with the screen profile and thereafter aligned to the preferred position before connecting other components of the screen assembly. Nevertheless, it will be understood by the skilled person that in specific applications it may also be convenient to fixate the position of the device with respect to the screen profile. For example, to provide a direct control and reduce the amount of slack on the connection. In an embodiment, a rigid connection may be provided to fix the position of the device within the channel. To that end, additional fastening means such as clips, clamps, or blocks, may be provided within the channel to secure the device in place.

Alternatively, in an embodiment, the device is fixed within the channel upon fastening. In this context, the term "fixed" refers to a fixation of the device within the elongate channel wherein no movement of the device in any direction, including rotation of the device, is possible. Preferably, the device is fixed by the integrated locking features, for example by the securing portions. Alternatively, or in addition, separate fixation features may be provided such as protruding portions of the device configured to provide friction between the device and the channel of the screen profile.

In an embodiment, the device channel opening has the same width as the channel opening of the screen profile. Advantageously, other components of the screen assembly can be fastened to the device channel opening instead of to the screen profile without adaptation.

In an embodiment, the device channel has the same dimensions as the channel of the screen profile. In this context the channel dimensions refer to the width and depth of the channel. Advantageously, other components of the screen assembly can be fastened within the device channel instead of within the screen profile channel without adaptation.

In an embodiment, the device comprises a guiding portion for guiding a screen cloth adjacent to the device channel. Preferably, the guiding portion is provided at a similar position with respect to the device channel as a guiding portion in the screen profile that the device is attached to. The guiding portion can be used to guide the unfolding of a second screen cloth if the screen assembly is configured to simultaneously fold multiple screen cloths.

In an embodiment, the device is made of aluminum.

In an embodiment, the device has a constant cross section. The constant cross section is typically arranged along a longitudinal direction of the channel of the screen profile and the device channel. Advantageously, the device can easily be formed through an extrusion process.

In an embodiment, the device engages with the channel of the screen profile along a length between 3 cm and 10 cm, preferably between 5 cm and 6 cm. Such dimensions are sufficient to transfer all associated forces without risking damage or breaking of the device.

In an embodiment, the device comprises a body, wherein the body is aligned with a front surface of the screen profile. Typically the body or bodies of the device is/are substantially flat, thereby creating space at a rear side of the screen profile. Such space may for example be used for storing a folded screen cloth.

According to a second aspect of the invention, and in accordance with the advantages of the invention as described herein above, there is provided a method for extending a screen profile. The method comprises providing a device according to the invention; inserting the device into the channel; and fastening the device to the channel by using the integrated locking features. Advantageously, the device comprises integrated locking features such that no separate fastening means are required. Moreover, no separate locking means such as screws, bolts and/or nuts are provided that could possibly damage the screen cloth. This makes the installation easy and cheap and further reduces the possibility of an incorrect installation.

In an embodiment, the step of inserting the device into the channel involves a rotation of the device or a part thereof. By rotating the device of or a part thereof, the device may be manipulated to pass the channel opening. This enables insertion of the device in the channel opening yet prevents an easy disengagement as typically rotation in the opposite direction would be required for the disengagement.

In an embodiment, the device comprises a front element and a rear element, hingedly engaged to each other, and wherein the step of inserting the device into the channel comprises: inserting proximal ends of the front element and rear element into the channel of the screen profile; and rotating the rear element with respect to the front element to fasten the device to the channel.

In an embodiment, the step of inserting proximal ends of the front element and rear element into the channel of the screen profile comprises inserting a proximal end of the rear element into the channel; and rotating the front element and rear element together and with respect to the screen profile to insert a proximal end of the front element into the channel. By rotating, the device may be manipulated to pass the channel opening.

In an embodiment, the step of locking the device in the channel includes a fastening through a snap-fit connection. In particular, when the device comprises a plurality of separate elements, such as the front element and the rear element, a step of fastening through a snap-fit connection may be applied to fasten the separate elements to each other.

According to another aspect of the invention, and in accordance with the advantages of the invention as described herein above, there is provided a screen assembly for a greenhouse or warehouse comprising a device according to the invention.

In an embodiment, the screen assembly is configured to house at least a first screen cloth and a second screen cloth spaced at a small distance from each other to form a cavity layer in between, wherein the device is used as a bridging element extending through the cavity layer and allowing drive means for both the first screen cloth and second screen cloth to be arranged on the same side of both the first screen cloth and second screen cloth. In this context, "a small distance" is defined as a distance between the screen cloths that is suitable to create a cavity layer. In particular, in existing greenhouses that comprises multiple screen devices attached to both the upper and lower beams of a lattice girder, the distance is too large for creating a cavity layer since the upper beam and lower beam of a lattice girder are typically spaced approximately 40 cm apart. Practice shows that such a distance is too large to provide the advantages of a cavity layer.

In an embodiment, the distance between the first screen cloth and second screen cloth is at least 2 cm, preferably at least 3 cm. Alternatively, or in addition, the distance between the first screen cloth and second screen cloth is at most 10 cm. It will be understood by the skilled person that the optimal thickness of the cavity layer may be dependent on the specific conditions wherein the screen device is applied. However, in most applications the distance between the first screen cloth and second screen cloth is preferably between 3 and 7 cm and approximately 5 cm. It will further be understood that the length of the device may be dependent on the desired distance between the first screen cloth and the second screen cloth.

In an embodiment, the drive means for both screen cloths are provided below the cavity layer and below the first and second screen cloths. Preferably, the first drive means and second drive means are arranged at essentially the same vertical level. This allows for a relatively compact screen assembly.

According to yet another aspect of the invention, and in accordance with the advantages of the invention as described herein above, there is provided a greenhouse or warehouse comprising a device or a screen assembly according to the invention.

### Brief Description of Drawings

Embodiments will now be described, by way of example only, with reference to the accompanying schematic drawings in which corresponding reference symbols indicate corresponding parts. In the drawings, like numerals designate like elements. Multiple instances of an element may each include separate letters appended to the reference number. For example, two instances of a particular element "20" may be labeled as "20a" and "20b". The reference number may be used without an appended letter (e.g. "20") to generally refer to an unspecified instance or to all instances of that element, while the reference number will include an appended letter (e.g. "20a") to refer to a specific instance of the element.
Figure 1 shows a side view of a screen profile according to the prior art.
Figure 2A shows a perspective view of a first embodiment of a device for extending a screen profile.
Figure 2B shows a side view of the device in Fig. 2A before insertion into a screen profile.
Figure 3A-3E illustrate different steps in a method of fastening the device according to the first embodiment to a screen profile.
Figure 4 shows a side view of a device for extending a screen profile according to a second embodiment.

The figures are meant for illustrative purposes only, and do not serve as restriction of the scope or the protection as laid down by the claims.

### Description of Embodiments

The following is a description of certain embodiments of the invention, given by way of example only and with reference to the figures.

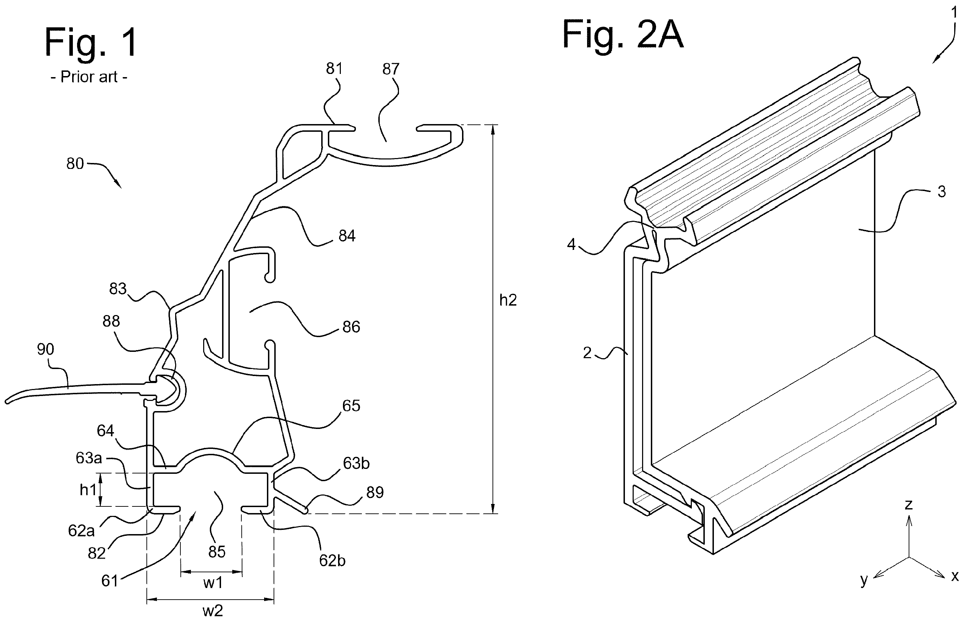

Fig. 1 shows a screen profile 80 according to the prior art. The screen profile 80 has an upper side 81, lower side 82, a front side 83 and a rear side 84. At the rear side 84, a hollow space is provided for receiving a folded screen cloth. In addition, the screen profile 80 comprises a plurality of elongate channels 85, 86, 87, configured to hold further components of a screen assembly. Such further components can be inserted into the elongate channels 85, 86, 87 and fastened thereto. For example, guide clips for support wires of the screen assembly can be clamped into the lower elongate channel 85 and upper elongate channel 87, or fastening means of a screen cloth can be engaged in the rear elongate channel 86 to fix the screen cloth to the screen profile 80. In addition, the screen profile typically comprises a chamber 88 at the front side 83 of the screen profile 80 for receiving a sealing rubber 90, and a guiding portion 89 extending from the rear side 84 of the screen profile 80 to guide the screen cloth during folding. Moreover, the screen profile 80 comprises one or more tubular bodies to provide the screen profile 80 with the required torsional stiffness and bending stiffness.

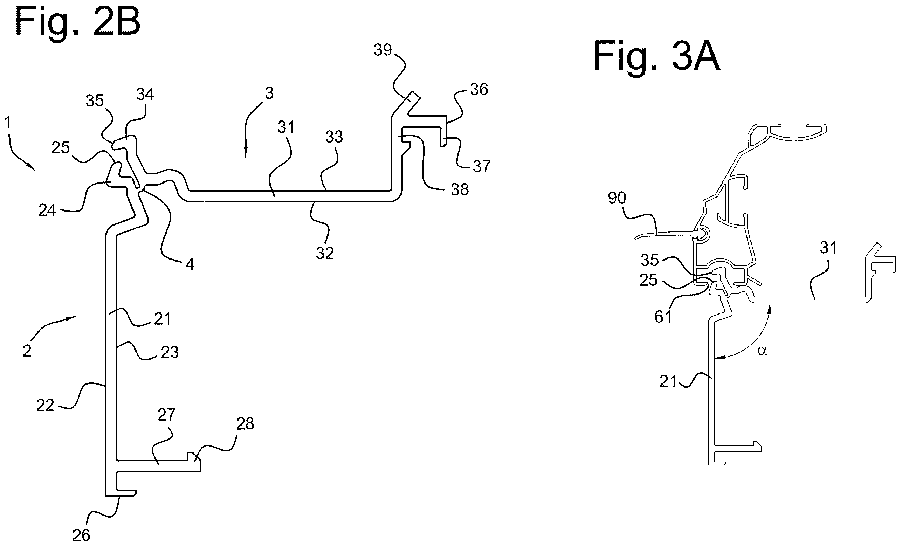

Devices according to the invention can be designed to be fastened in the lower elongate channel 85 and/or the upper elongate channel 87. Fig. 2-4 describe devices according to the invention that are designed to be fastened to the lower elongate channel 85. Nevertheless, it will be understood by the skilled person how to alter the design of the embodiments to provide alternative embodiments that are also suitable for engaging in the upper elongate channel 87.

The lower elongate channel 85 comprises a channel opening 61, channel top walls 62a, 62b, channel side walls 63a, 63b, and a channel lower wall 64. The channel lower wall 64 has a recessed portion 65 arranged opposite to the channel opening 61. The overall width w2 of the channel 85 is typically 1.6 cm. The width w1 of the channel opening 61 is 0.8 cm. The height h1 of the channel, as measured from a channel top wall to the channel lower wall is approximately 0.5 cm. The total screen profile 80 has a height h2 of approximately 5,5 cm as measured from the upper side 81 to the lower side 82. Further details of the design of the screen profile 80 will not be discussed herein and can be found for example in patent document NL2002320C2.

Fig. 2A shows a perspective view of a first embodiment of a device 1 for extending a screen profile 80. The device is shown in its locked configuration, i.e., its configuration after locking it to a screen profile 80. The device 1 comprises a front element 2 and a rear element 3 connected to each other through a connector portion 4. The connector portion 4 is very thin, providing a hinged connection between the front element 2 and the rear element 3. The device 1 is made of aluminum and has been extruded. An elongate extruded profile was cut to form the device having a width of approximately 5 cm. The cross-sectional area of the device 1 is constant along a transverse direction Y.

Fig. 2B shows a side view of the device 1 according to the first embodiment in a position wherein the device has not been engaged to the screen profile 80 yet.

The front element 2 has a substantially flat body 21 with a front surface 22, rear surface 23, proximal end 25, and distal end 26. The front element 2 is further provided with a front profile securing portion 24 near the proximal end 25, a front channel forming portion 27 near the distal end 26, and a male connective portion 28.

The rear element 3 has a substantially flat body 31 with a front surface 32, rear surface 33, proximal end 35, and distal end 36. The rear element 3 is further provided with a rear profile securing portion 34 near the proximal end 35, a rear channel forming portion 37 near the distal end 36, a complementary female connective portion 38, i.e., complementary to the male connective portion on the front element, and a guiding portion 39 near the distal end 36.

Fig. 3A-3E schematically illustrate a method of fastening the device 1 to a screen profile 80. Fig. 3A depicts a starting position. The device 1 has been provided and the body 21 of the front element 2 has been arranged at an angle α of approximately 90 degrees with respect to the body 31 of the rear element 3. The respective proximal ends 25, 35 of both the front element 2 and rear element 3 have been arranged near the channel opening 61 of the screen profile 80. The proximal end 35 of the rear element 3 has been passed through the channel opening 61, whereas the proximal end 25 of the front element 2 is arranged just outside of the channel 85.

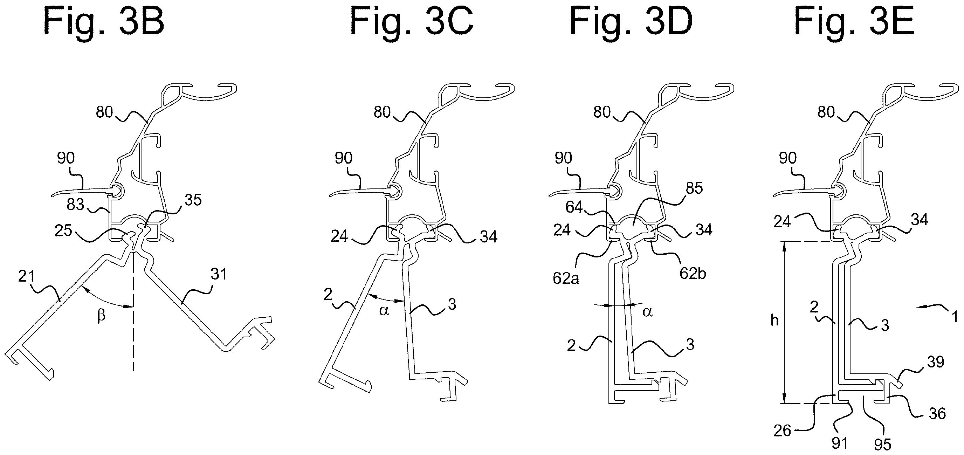

As Fig. 3B shows, the front element 2 and rear element 3 are rotated together over an angle β of approximately 60 degrees by moving the bodies 21,31 towards the front side 83 of the profile 80. During rotation, the front element 2 and rear element 3 are not moved with respect to each other. Consequent to the rotation, the proximal end 25 of the front element 2 enters the channel 85. After both proximal ends 25, 35 have been provided within the channel 85, the bodies 21, 31 of the front element 2 and rear element 3 are pushed towards each other, thereby gradually reducing the angle α, defined as the angle between the bodies 21, 31 of the front and rear elements 2,3, to zero.

Fig. 3C shows an intermediate step wherein the angle α has been reduced to approximately 45 degrees. The rear element 3 has rotated with respect to the front element 2. Due to the rotation, the securing portions 24, 34 are no longer in a contracted configuration wherein the portions are provided in a central space of the channel 85. The securing portions 24,34 are moved towards the channel side walls 63a, 63b to an expanded configuration. Some pressure on the bodies 21, 31 is required to snap the securing portions 24, 34 into place. Advantageously, after reducing the angle α to approximately 10 degrees or less, the device 1 can no longer easily be disengaged.

Fig. 3D illustrates a position wherein the bodies 21, 31 of the front element 2 and rear element 3 are almost parallel to each other, i.e., the angle α is less than 10 degrees. The securing portions 24, 34 stretch in an upward direction within the channel 85, abutting both the respective top walls 62a, 62b and lower wall 64 of the channel 85. The securing portions 24, 34 thereby prevent any vertical movement of the front element 2, respectively the rear element 3, with respect to the screen profile 80. Moreover, the securing portions 24,34, cut into the channel lower wall 64 during the rotation, thereby making any substantial rotation of the device 1 with respect to the channel 85 impossible. This is advantageous as a force couple may occur when a drive assembly exerts a force at a lower end of the device. The securing portions 24,34 prevent that the device 1 starts rotating.

After the device 1 has been inserted, it can still be easily disengaged from the channel 85 by increasing the angle α between the front element 2 and rear element 3. To prevent disengagement of the device 1, the device 1 is locked.

Fig. 3E shows the device 1 in a locked position. The male connector portion 28 and female connector portion 38 have engaged with each otherthrough a snap-fit connection, thereby fastening the front element 2 to the rear element 3 and preventing that the device 1 can be loosened by increasing the angle α between the front element 2 and rear element 3. Moreover, the angle α has been reduced to substantially zero, thereby forming a device channel 95 in the device 1, accessible through the device channel opening 91 formed between the channel forming portions 26, 36. The device channel opening 91 has identical dimensions to the channel opening 61 of the screen profile 80. This allows any further components of the screen assembly that are normally to be fastened to the screen profile 80, to be fastened in the device channel 95 instead. Specifically, the drive means of a drive assembly for folding and unfolding a screen cloth can be engaged in the channel of the device 1. The guiding portion 39 is provided at a rear side of the device 1 and can be used to guide a screen cloth during folding.

Advantageous to the arrangement of the male and female connector portions 28, 38 inside the device channel 95 is that after fastening a further component into the device channel 95, movement of the male connector portion 28 away from the female connector portion 38 is blocked by the presence of the further component.

The channel opening 91 is arranged at a distance h of approximately 5,5 cm from the channel opening 61 of the screen profile 80. The device 1 is therefore considered to extend the height of the screen profile 80 over a length h of approximately 5,5 cm. It will be understood that this length may be easily adjusted in other embodiments, dependent on the specific wishes for extending the screen profile 80.

Advantageous to the device 1 is that it is quick and easy to install. The device 1 locks itself upon fastening, without the aid of any additional tools or fastening means such as screws, bolts or the like. Consequently, it is not possible to install the device 1 incorrectly and the device 1 has no additional fasteners that extend from the device and can damage the screen cloth. Once the locking features 28,38 interlock, the device 1 is properly fastened.

It will be understood, however, that many alternatives for the locking features 28, 38 exist. These include but are not limited to snap-fit connections and connections through clicking. Moreover, in other embodiments, external fastening means, such as for instance straps, may also be provided to clamp the front element 2 and rear element 3 together.

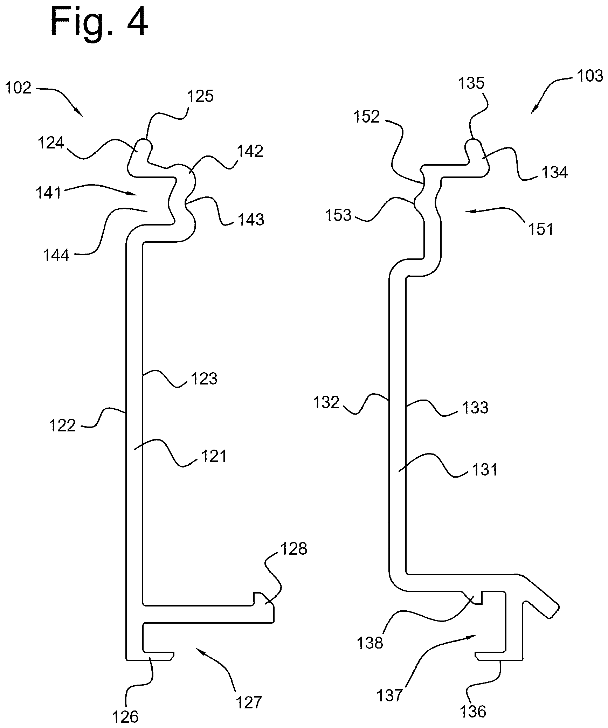

Fig. 4 shows a side view of an alternative embodiment of the device according to the invention. Features of the device that have already been described above with reference to the first embodiment may also be present in the device shown in Fig. 4 and will not all be discussed here again. For the discussion with reference to Fig. 4, like features are designated with similar reference numerals preceded by 100 to distinguish the embodiments.

The front element 102 and rear element 103 of the device are formed separately, yet provided with complementary surfaces to form a hinged engagement. The front element 102 comprises a front engaging portion 141 near its proximal end 125 with the front securing portion 124, and an outer cylindrical surface 142, indent 143, and front chamber 144. The rear element 103 comprises a rear profile engaging portion 151 near its proximal end 135 with the rear securing portion 134, an inner cylindrical surface 152 of part of a hollow cylindrical portion in the element, and a protruding portion 153. The outer cylindrical surface 142 on the front element 102 and the inner cylindrical surface 152 on the rear element have the same curvature and are configured to engage with each other to form a hinged engagement.

In yet an alternative embodiment, the front element 102 and rear element 103 may be connected through connecting the proximal ends 125, 135 of the front element 102 and rear element 103 using a living hinge. This allows the front element 102 and rear element 103 to be integrally formed, yet it will be understood that upon fastening the device 101 following the steps as depicted in Fig. 3A-3E, the hinge while break. When forcing the angle α to reduce, a traction force is exerted on the connector portion until it snaps and the front element 102 and rear element 103 disconnect. The formation of the device as an integral element eases both the manufacture as well as the installation.

The present invention may be embodied in other specific forms without departing from its essential characteristics. The described embodiments are to be considered in all respects only as illustrative and not restrictive to the inventive concept. The scope of the invention is, therefore, indicated by the appended claims rather than by the foregoing description. It will be apparent to the person skilled in the art that alternative and equivalent embodiments of the invention can be conceived and reduced to practice. In addition, many modifications may be made to adapt a particular configuration or material to the teachings of the invention without departing from the essential scope thereof.

All modifications which come within the meaning and range of equivalency of the claims are to be embraced within their scope.

## Claims

1. A device for extending a screen profile in a screen assembly, the screen profile comprising a channel with a channel opening and the device comprising a device channel with a device channel opening, wherein the device channel is spaced from the channel of the screen profile to extend a height of the screen profile, and wherein the device is configured to be inserted into the channel through the channel opening, the device comprising integrated locking features configured to lock the device inside the channel.

2. The device according to claim 1, wherein the device is configured to extend the height of the screen profile with at least 3 cm, optionally at least 10 cm.

3. The device according to claim 1 or 2, wherein the integrated locking features comprise one or more securing portions configured to be arranged entirely within the channel and dimensioned to prevent passage of the device back through the channel opening of the screen profile , preferably wherein the one or more securing portions can be arranged in a contracted configuration for insertion into the channel and an expanded configuration for locking the device inside the channel.

4. The device according to any of the preceding claims, wherein the integrated locking features are configured to block rotation of the device with respect to the channel around a longitudinal axis of the channel.

5. The device according to any preceding claim, wherein the device comprises a front element and a rear element and wherein the integrated locking features comprise a pair of complementary male and female connective portions to lock the front element and rear element together.

6. The device according to any preceding claim, wherein the device comprises a front element and a rear element that are hingedly engaged to each other, preferably wherein the integrated locking features prevent a rotation of the front element with respect to the rear element.

7. The device according to claim 6, the front element further comprising part of a cylinder, the rear element comprising part of a hollow cylinder, wherein an outer circumferential surface of the part of the cylinder of the front element is shaped complementary to an inner surface of the part of the hollow cylinder of the rear element, enabling the rear element to rotate with respect to the front element while the outer circumferential surface and inner surface remain engaged.

8. The device according to any of the preceding claims, wherein the device is integrally formed.

9. The device according to any of the preceding claims and dependent on any of claims 5 or 6, wherein the front element and rear element each comprise a channel forming portion configured to form the device channel after fastening the device to the screen profile, optionally wherein one or more of the integrated locking features are provided within the device channel.

10. The device according to any of the preceding claims wherein the device channel opening has the same width as the channel opening of the screen profile, optionally wherein the device channel has the same dimensions as the channel of the screen profile.

11. The device according to any of the preceding claims made of aluminum, preferably wherein the device has a constant cross section.

12. A method for extending a screen profile, the method comprising
- providing a device according to any of claims 1-11;
- inserting the device into the channel; and
- fastening, optionally through a snap-fit connection, the device to the channel by using the integrated locking features.

13. The method according to claim 12, wherein the device comprises a front element and a rear element, hingedly engaged to each other, and wherein the step of inserting the device into the channel comprises:
- inserting proximal ends of the front element and rear element into the channel of the screen profile; and
- rotating the rear element with respect to the front element to fasten the device to the channel preferably wherein the step of inserting proximal ends of the front element and rear element into the channel of the screen profile comprises:
- inserting a proximal end of the rear element into the channel; and
- rotating the front element and rear element together and with respect to the screen profile to insert a proximal end of the front element into the channel.

14. A screen assembly for a greenhouse or warehouse comprising a device according to any of claims 1-11, preferably wherein the screen assembly is configured to house at least a first screen cloth and a second screen cloth spaced at a small distance from each other to form a cavity layer in between, wherein the device is used as a bridging element extending through the cavity.

15. A greenhouse or warehouse comprising a device according to any of claims 1-11, or a screen assembly according to claim 14.
